## Europäisches Patentamt
## European Patent Office
## Office européen des brevets

(19)

(11) Veröffentlichungsnummer: **0 038 472**
**A2**

(12) # EUROPÄISCHE PATENTANMELDUNG

(21) Anmeldenummer: **81102661.6**

(22) Anmeldetag: **08.04.81**

(51) Int. Cl.³: **H 01 G 4/30**
**H 01 G 13/00**

(30) Priorität: **23.04.80 DE 3015678**

(43) Veröffentlichungstag der Anmeldung:
**28.10.81 Patentblatt 81/43**

(84) Benannte Vertragsstaaten:
**FR GB IT SE**

(71) Anmelder: **SIEMENS AKTIENGESELLSCHAFT Berlin**
**und München**
**Postfach 22 02 61**
**D-8000 München 22(DE)**

(72) Erfinder: **Kessler, Hartmut, Dipl.-Ing.**
**Kurt Schuhmacher Strasse 5b**
**D-8400 Regensburg(DE)**

(54) **Verfahren zur Herstellung von Schichtkondensatoren.**

(57) Beim Übereinanderwickeln von Mutterkondensatoren auf einer Trommel mit großem Durchmesser werden zwischen je zwei Mutterkondensatoren Decklagen (4,6) eingewickelt. Diese Decklagen (4,6) sind relativ dick und steif.

Zur besseren Anpressung dieser Decklagen (4,6) wird eine Haltefolie (15) miteingewickelt. Dadurch ist eine rationelle Herstellung von Schichtkondensatoren mit besonders dünnen Dielektrikumsfolien möglich.

FIG 2

EP 0 038 472 A2

0038472

SIEMENS AKTIENGESELLSCHAFT     Unser Zeichen
Berlin und München             VPA   80 P 1 0 5 9 E

Verfahren zur Herstellung von Schichtkondensatoren.

Die vorliegende Erfindung betrifft ein Verfahren zur Herstellung von Schichtkondensatoren, bei dem auf eine Trommel mit großem Durchmesser mehrere aus einer oder mehreren Kondensatorfolien gewickelte Mutterkondensatoren nacheinander aufgebracht werden, bei dem auf jeden Mutterkondensator eine Windung eines Deckfolienpaketes aufgewickelt wird, bei dem zwischen Anfang und Ende der Windung des Deckfolienpaketes ein kleiner Zwischenraum freibleibt, wobei durch diesen Zwischenraum die Wertfolie geführt und zum darüber liegenden Mutterkondensator weitergewickelt wird.

Ein derartiges Verfahren ist aus der DE-PS 24 24 368 bekannt. Dort wird durch das Übereinanderwickeln mehrerer Mutterkondensatoren in der beschriebenen Art ein Ausgangskondensator hergestellt, dessen Stirnflächen vollständig beschoopt werden. Im Deckfolienpaket sind Trennfolien enthalten, welche nach dem vollständigen Beschoopen des Ausgangskondensators ein Zertrennen desselben in die Mutterkondensatoren ermöglichen. Diese Trennfolien stehen beispielsweise über die Wertfolien und Deckfolien über und überragen die aufgespritzten Schoopschichten. Dadurch ist ein Zertrennen des Ausgangskondensators entlang der Trennfolien ohne weiteres möglich, insbesondere wenn zumindest ein radialer Schnitt durch den Ausgangskondensator angebracht wird. Die Mutterkondensatoren werden anschließend in Einzelkondensatoren zersägt.

Als Wertfolien werden die Folien bezeichnet, die den Kapazitätswert des Kondensators bestimmen. Sie enthalten mindestens eine Metallisierung, können aber auch mehrere Metallisierungen und/oder Kunststoffschichten enthalten.

Mhs 1 Lk / 21.3.1980

Das Deckfolienpaket muß die jeweils für einen darunter liegenden und einen darüber liegenden Mutterkondensator notwendigen Deckfolien und die Trennfolie enthalten. Dadurch bedingt ist das Deckfolienpaket wesentlich dicker und steifer als die Wertfolien, aus denen der kapazitiv wirksame Teil des Kondensators gewickelt wird.

Insbesondere bei der Verwendung besonders dünner Wertfolien verlaufen die Wertfolien über und mit dem Deckfolienpaket seitlich, es entstehen Mutterwickel mit einem nicht mehr rechteckförmigen Querschnitt.

Die Aufgabe, die der vorliegenden Erfindung zugrundeliegt, besteht darin, daß bei einem Verfahren der eingangs beschriebenen Art auch bei Verwendung besonders dünner Wertfolien ein seitliches Verlaufen der Wertfolien vermieden wird.

Diese Aufgabe wird dadurch gelöst, daß zumindest unter die letzte Lage der Wertfolien eine Haltefolie eingeführt und eingewickelt wird, daß das Deckfolienpaket zu dieser phasenverschoden unter die Haltefolie eingeführt und eingewickelt wird, daß die Haltefolie mit den Wertfolien über den Zwischenraum zwischen Anfang und Ende der Windung des Deckfolienpaketes geführt, ein Stück weitergewickelt und daß dann die Haltefolie abgetrennt wird.

Diese Lösung des Problems beruht auf unserer Erkenntnis, daß das seitliche Verlaufen der Wertfolien durch die Steifigkeit des Deckfolienpaketes hervorgerufen wird. Dadurch legt sich das Deckfolienpaket nur stellenweise, sozusagen in Form einer Bogenbrücke auf die Unterlage. Beim weiteren Wickeln der Wertfolien wird der Druck auf das darunter liegende Deckfolienpaket ständig vergrößert, das Deckfolienpaket wird immer fester auf den darunter liegenden Mutterkondensator gepreßt und versucht dabei, an den Bogenstellen seitlich auszuweichen, wobei es die

0038472

80 P 1 0 5 9 E

bereits aufgewickelten Wertfolien mitnimmt, so daß der Wickel eine seitliche Verschiebung erfährt. Erst wenn das Deckfolienpaket vollständig angepreßt ist, also u.U. erst nach 1mm bis 2mm Aufwickelhöhe der Wertfolie, ist dieser Vorgang beendet, und der Rest der Wicklung zeigt keinen seitlichen Verlauf mehr.

Die eingewickelten Haltefolien verstärken die Zugfestigkeit der Wertfolien. Dadurch ist die Anwendung eines erhöhten Wickelzuges möglich. Dieser preßt das Deckfolienpaket von vornherein so stark auf den darunter liegenden Mutterwickel, daß das Deckfolienpaket später nicht mehr seitlich ausweicht.

Der erhöhte Wickelzug wird durch die Reibung der Haltefolie auf dem darunter liegenden Wickel ermöglicht, ohne daß die darüber liegende Wertfolie unzulässig auf Zug beansprucht wird.

Beträgt die Dicke der Wertfolien beispielsweise 5µm und die Dicke des Deckfolienpaketes etwa 1mm, so genügt es, eine Haltefolie von 50µm einzuwickeln. Die Reibungskraft für die erforderliche Zugbeanspruchung reicht aus, wenn die Haltefolie um mindestens eine Windung früher eingewickelt wird, als das Deckfolienpaket und wenn die Haltefolie erst mindestens eine Windung nach dem Überqueren des Zwischenraumes zwischen Anfang und Ende des Deckfolienpaketes abgetrennt wird. Dieses Überqueren erfolgt, nachdem die Haltefolie auf dem Deckfolienpaket eine volle Windung gebildet hat.

Die aufgewickelten Folien werden zweckmäßig durch eine Andruckrolle auf den Wickel gedrückt und einem Wickelzug zusätzlich ausgesetzt. Dabei ist es vorteilhaft, daß bei einem großen Unterschied der Dicke der Wertfolien und der Haltefolie nach dem Einführen der Haltefolie der Druck der Andruckrolle verstärkt und der Wickelzug der Haltefolie erhöht wird.Dies wird vorteilhaft fortgesetzt, bis das Deckfolienpaket eingeführt wird. Zu diesem Zeitpunkt ist der maximale Wickelzug vorhanden. Vorteilhaft wird nach dem Überqueren des Zwischenraumes zwischen Anfang und Ende des Deckfolienpaketes der Wickelzug laufend so verringert, daß er beim Abtrennen der Haltefolie den für die Wertfolie zulässigen Wert erreicht. Durch diese Maßnahme wird in keiner Phase der Wickelzug über das für die Wertfolien zulässige Maß hinaus erhöht. Gleichzeitig wird die erreichbare Reibungskraft optimal ausgenützt. Die Änderung des Wickelzuges kann kontinuierlich oder auch in Stufen erfolgen.

Ein ausreichender Wickelzug ist erreicht, wenn das Deckfolienpaket über den ganzen Umfang des darunter liegenden Mutterkondensators mit diesem formschlüssig in Berührung steht.

Vorteilhaft wird eine Haltefolie eingewickelt, welche mit den Daten des Kondensators so bestempelt ist, daß diese Daten nach der Fertigstellung des Kondensators durch die Deckfolien hindurch zu lesen sind. Die zwischen den Lagen der Haltefolie befindlichen Lagen der Wertfolie sind metallisiert, also undurchsichtig, und gewährleisten daher, daß die Schrift auf der Haltefolie nicht doppelt oder unklar erscheint.

Eine besonders gleichmäßige Druckverteilung auch in der Nähe der Enden des Deckfolienpaketes wird erreicht, indem das Deckfolienpaket in geringem Abstand vor dem bereits eingewickelten, eine oder mehrere Windungen zurückliegenden, d.h. tieferliegenden Beginn der Haltefolie eingeführt wird und indem die Haltefolie nach dem Aufbringen der erforderlichen Windungen über dem Zwischenraum abgetrennt wird.

Als Haltefolie kann grundsätzlich jede Isolierstoffolie verwendet werden. Besonders geeignet sind Folien, die etwa gleiche Schrumpfwerte aufweisen, wie die Deckfolie. Sie können ein- oder beidseitig klebend oder heißsiegelfähig beschichtet sein. Die Breite kann gleich der Breite der Deckfolien oder bei versetzt übereinander geschichteten Deckfolien gleich der Breite des Deckfolienpaketes gewählt werden.

Die Erfindung wird nun anhand von zwei Figuren näher erläutert. Sie ist nicht auf das in den Figuren gezeigte Beispiel beschränkt.

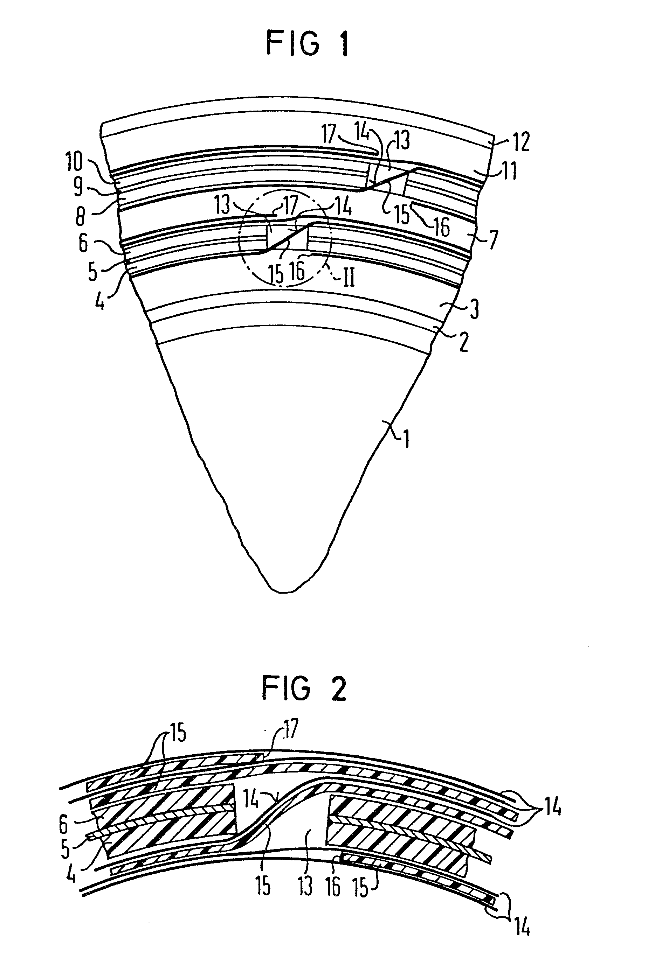

Fig. 1 zeigt einen Ausgangskondensator in teilweise gebrochener Darstellung.

Fig. 2 zeigt einen Ausschnitt aus Fig. 1 in teilweise geschnittener und gebrochener Darstellung und stellt Anfang und Ende der Deckfolien, der Trennfolie und der Haltefolie dar.

Auf einer Trommel 1 mit großem Durchmesser ist eine erste Decklage 2 von Isolierstoffolien als Deckfolien, eine erste Lage 3 aus Wertfolien, eine zweite Decklage 4, eine erste Trennfolie 5, eine dritte Decklage 6, weitere Lagen 7 und 11 von Wertfolien, Decklagen 8 und 10, eine weitere Trennfolie 9 und eine Decklage 12 aufgewickelt. Zwei Decklagen 4 und 6 bzw. 8 und 10 und eine dazwischen angeordnete Trennfolie 5 bzw. 9 bilden jeweils ein Deckfolienpaket, welches vorgefertigt und als Ganzes eingewickelt ist. Ein Deckfolienpaket besteht z.B. aus zehn Deckfolien plus einer Trennfolie plus zehn Deckfolien, wobei die Deckfolien 50 µm und die Trennfolie 100 µm dick sind, d.h. die Gesamtdicke dieses Deckfolienpaketes 1,1 mm beträgt.

Unter die letzte Windung der Wertfolie 14 ist eine Haltefolie 15 eingewickelt. Unter diese Haltefolie ist das

0038472

Deckfolienpaket, welches aus den Folien 4 bis 6 bzw. 8 bis 10 besteht, eingeführt und eingewickelt. Das Deckfolienpaket umfaßt etwas weniger als eine Windung. Zwischen Anfang und Ende des Deckfolienpaketes ist ein Zwischenraum 13 gelegen, durch welchen die Haltefolie 15 und die Wertfolie 14 hindurchlaufen. Die Haltefolie 15 bildet über dem Deckfolienpaket eine vollständige Windung und eine beinahe vollständige zweite Windung. Die Haltefolie ist über dem Zwischenraum 13 abgeschnitten.

Das Deckfolienpaket mit den Folienlagen 4 bis 6 bzw. 8 bis 10 ist kurz vor bzw. über dem Anfang 16 der Haltefolie 15 in den Wickel eingespult. Das Ende 17 der Haltefolie 15 liegt über dem Zwischenraum 13. Dadurch sind sowohl der Anfang als auch das Ende des Deckfolienpaketes besonders glatt gegen den darunter liegenden Mutterkondensator gedrückt.

Durch die Haltefolie ist auch bei der Verwendung von dünnen Wertfolien mit einer Dicke von weniger als 5 $\mu$m gewährleistet, daß ein seitliches Verlaufen der Wertfolien beim Wickeln nicht eintritt, daß die Wicklung auf der Trommel stabil bleibt, daß beim Zersägen der Mutterkondensatoren und beim Bedrahten keine Schwierigkeiten infolge von überstehenden Teilen des Mutterkondensators auftreten, daß die Maßhaltigkeit gewährleistet ist und daß die Kontaktgüte den Forderungen entspricht. Letzteres ist in Frage gestellt, wenn durch ein seitliches Verschieben der Folie das Schoopmetall nicht mehr an die Metallisierungen reicht.

Die Haltefolie kann in üblicher Weise automatisch in den Wickel eingeführt werden.

8 Patentansprüche
2 Figuren

Patentansprüche

1. Verfahren zur Herstellung von Schichtkondensatoren, bei dem auf eine Trommel mit großem Durchmesser mehrere aus einer oder mehreren Kondensatorfolien gewickelte Mutterkondensatoren nacheinander aufgebracht werden, bei dem auf jeden Mutterkondensator eine Windung eines Deckfolienpaketes aufgewickelt wird, wobei zwischen Anfang und Ende der Windung des Deckfolienpaketes ein kleiner Zwischenraum freibleibt, wobei durch diesen Zwischenraum die Wertfolien geführt und zum darüber liegenden Mutterkondensator weitergewickelt werden, d a d u r c h g e k e n n z e i c h n e t , daß zumindest die letzte Lage der Wertfolien (14) eine Haltefolie (15) eingeführt und mit erhöhtem Wickelzug eingewickelt wird, daß das Deckfolienpaket (4-5; 8-10) zu dieser phasenverschoben unter die Haltefolie (15) eingeführt und eingewickelt wird, daß die Haltefolie (15) mit den Wertfolien (14) über den Zwischenraum (13) zwischen Anfang und Ende der Wicklung des Deckfolienpaketes geführt, mehr als eine Windung weitergewickelt und daß dann die Haltefolie abgetrennt wird.

2. Verfahren nach Anspruch 1, d a d u r c h g e k e n n z e i c h n e t , daß die Haltefolie um mindestens eine Windung früher eingewickelt wird, als das Deckfolienpaket.

3. Verfahren nach den Ansprüchen 1 oder 2, d a d u r c h g e k e n n z e i c h n e t , daß die Haltefolie erst mindestens eine Windung nach dem Überqueren des Zwischenraumes zwischen Anfang und Ende des Deckfolienpaketes abgetrennt wird.

4. Verfahren nach einem der Ansprüche 1 bis 3, bei dem durch eine Andruckrolle die aufgewickelten Folien auf den Wickel gedrückt und die Folien einem Wickelzug ausgesetzt

0038472

80 P 1 0 5 9 E

werden, d a d u r c h  g e k e n n z e i c h n e t, daß
nach dem Einführen der Haltefolie der Druck der Andruckrolle verstärkt und der Wickelzug der Haltefolie erhöht
wird.

5. Verfahren nach Anspruch 4, d a d u r c h  g e k e n n -
z e i c h n e t, daß der Wickelzug mit der eingewickelten Länge der Haltefolie laufend erhöht wird, bis das
Deckfolienpaket eingeführt wird.

6. Verfahren nach einem der Ansprüche 1 bis 5, d a d u r c h
g e k e n n z e i c h n e t, daß nach dem Überqueren des
Zwischenraums durch die Haltefolie zwischen Anfang und
Ende des Deckfolienpaketes der Wickelzug laufend so vermindert wird, daß er beim Abtrennen der Haltefolie den
für die Wertfolie zulässigen Wert erreicht hat.

7. Verfahren nach einem der Ansprüche 1 bis 6, d a d u r c h
g e k e n n z e i c h n e t, daß eine Haltefolie eingewickelt wird, welche mit den Daten des Kondensators so
bestempelt ist, daß diese Daten nach der Fertigstellung
des Kondensators durch die Deckfolien hindurch zu lesen
sind.

8. Verfahren nach einem der Ansprüche 1 bis 7, d a d u r c h
g e k e n n z e i c h n e t, daß das Deckfolienpaket
(4-6; 8-10) in geringem Abstand vor dem bereits eingewikkelten, eine oder mehrere Windungen tiefer liegenden Beginn der Haltefolie (15) eingeführt wird und daß die Haltefolie (15) über dem Zwischenraum (13) abgetrennt wird.

FIG 1

FIG 2